# EUROPEAN PATENT SPECIFICATION

(11) **EP 2 798 009 B1**
(45) Date of publication and mention of the grant of the patent: **11.04.2018**
(21) Application number: 12808664.2
(22) Date of filing: 27.12.2012
(51) Int. Cl.: C08L 77/00, C09D 177/00, C08L 23/08, C09D 123/08

(54) **THERMOPLASTIC POWDER COMPOSITIONS**
WÄRMEHÄRTENDE PULVERZUSAMMENSETZUNGEN
COMPOSITIONS DE POUDRE THERMOPLASTIQUE

(30) Priority: 30.12.2011 US 201113341684
(43) Date of publication of application: 05.11.2014
(73) Proprietor: E. I. du Pont de Nemours and Company, Wilmington, DE 19898 (US)
(72) Inventor: CHOU, Richard, T., Hockessin, Delaware 19707 (US); KELLY, Mark, B., Beaumont, Texas 77706 (US); MAGNIN, Olivier, CH-1052 Le Mont-Sur-Lausanne (CH)
(74) Representative: Dannenberger, Oliver Andre
(86) International application number: PCT/US2012/071736
(87) International publication number: WO 2013/101886

(56) References cited:
- US-A1- 2010 113 670
- US-B2- 6 680 082

## Description

### Field of the Invention

The invention relates to powder coating materials for coating and protecting metal objects.

### Background Of The Invention

Powder coatings for materials or objects of metal are known. The success of powder coating metals is mainly due to their functional and/or decorative performance as well as the reduction or elimination of noxious by-products in the production of coated substrates. Powder coatings are utilized for either decorative purposes or protective purposes. Most decorative coatings are thin coatings and color, gloss, and appearance may be the primary attributes. For protective purposes, the coatings are thicker, and longevity, corrosion protection, impact resistance properties and insulation are the most important attributes.

Metal vessels, pipes and other forms used for containing and transporting a variety of materials are subject to corrosion or erosion by the contained or transported materials. Metal objects are also subject to corrosion or erosion by the environment with which they come into contact. For example, soil, salt water or atmospheric and climatic conditions can have a harsh effect on metal. To protect against such corrosion and erosion, metals are commonly coated with plastic materials. In addition to providing protection against corrosion or erosion, certain plastic coatings provide desirable properties inherent in the plastic being used. For example, a very smooth surface can reduce the coefficient of friction in a pipe, thus reducing the energy needed to pump a fluid through the pipe.

The bulk of powder coatings are thermoset coatings. These coatings typically chemically react during post-application baking to form a polymer network that will generally not remelt. Materials used in thermoset powder coatings include epoxies, polyesters and acrylics. Crosslinking agents typically employed include amines, anhydrides and isocyanates.

Thermosets have the advantage of relatively low coefficient of expansion and less differential coefficient of expansion with metals. They are, however, quite brittle and are therefore used in quite thin layers. Moreover, they must be cured. Thermoset epoxy resins are excellent adhesives but do not necessarily provide ideal coatings for many purposes.

Thermoplastic resins, on the other hand, are generally of high molecular weight and require relatively high temperatures to achieve melt and flow during coating. However, the molecular weight and melt viscosity remain constant during the coating procedure so that the polymer can be easily remelted for repair or touch-up.

Many thermoplastic resins have been evaluated in powder coating applications, but few have the proper combination of physical and mechanical properties, stability, and melt viscosity. For attaining functional performance and longevity, an ideal thermoplastic polymer should have low density, high mechanical strength and good surface hardness independent of humidity, high impact strength, scratch and abrasion resistance, low water absorption, good adhesion to metals, good resistance to chemicals in general, and weatherability.

Typical thermoplastic coating polymers include polyamides (nylons), polyolefins, plasticized PVC, polyester, poly(vinylidene fluoride), and ionomers.

Nylon-11 and nylon-12 are known powder coating products, but these powder coatings are expensive and may be over-engineered for some applications. Also the adhesion of nylon-11 and nylon-12 to metals may not be very strong, so for durable applications they may need primer pretreatment. Nylon-6 is less expensive than nylon-11 or -12 but it has much higher water absorption, limiting its use as a powder coating. Scratch and abrasion resistance may also be poor with polyamide powder coatings.

U.S. Patent 4,440,908 teaches the preparation of certain powders of thermoplastic resins made from polyethylene or ethylene vinyl acetate copolymers. U.S. Patent 4,481,239 teaches a process for coating metallic substrates with heat hardenable synthetic resins.

lonomers are acid copolymers in which a portion of the carboxylic acid groups in the copolymer are neutralized to salts containing metal ions. U.S. Patent 3,264,272 discloses a composition comprising a random copolymer of copolymerized units of an alpha-olefin having from two to ten carbon atoms, an alpha, beta-ethylenically-unsaturated carboxylic acid having from three to eight carbon atoms in which 10 to 90 percent of the acid groups are neutralized with metal ions, and an optional third mono-ethylenically unsaturated comonomer such as methyl methacrylate or ethyl acrylate.

lonomers have been used for miscellaneous powder coating applications for a long time. U.S. Patent 4,056,653 disclosed a process to make spherical ionomer particles having an average diameter of 10 to 100 micrometers. U.S. Patent 5,320,905 teaches ethylene carboxylic acid resins prepared from a copolymer having 85 to 50 weight percent olefin such as ethylene and 15 to 50 weight percent of at least one alpha, beta-ethylenically unsaturated carboxylic acid and at least one cationic metal compound or complex to form a salt which is ultimately made into fine particles or powders.

U.S. Patent 5,344,883 discloses a polymer powder coating composition that comprises a low molecular weight ionomer added to a polymer resin powder to reduce gloss. JP1995-145271-A discloses a composition for powder coating having an average particle size of up to 300 micrometers, comprising an ethylene/unsaturated carboxylic acid copolymer containing 5 to 15 weight % unsaturated carboxylic acid or its salt with 0.3 to 5.0 weight % of a phthalate type plasticizer compound. U.S. Patent 6,090,454 discloses a process for forming a coating of a thermoplastic polymer powder such as an ionomer on a hollow object formed of a low electrically conductive material.

More recently, mixed ion ionomer compositions have been developed for use in powder coating applications (U.S. Patent 6,680,082).

US 2010/113670 A1 describes a composition in powder form for the coating of metallic substrates comprising a homopolyamide selected from PA11 and PA12, a copolyamide, and calcium carbonate.

Achieving both functional performance and application performance in a metal powder coating has been difficult. While neutralization of ethylene acid copolymers may provide some benefits in terms of physical properties, it can actually negatively impact their use as powder coatings. For example, high hardness and stiffness and excellent scratch and abrasion resistance are desirable properties associated with ionomers but these compounds also have reduced adhesion, high viscosity, vulnerability to weathering and water absorption and are more prone to react with additives such as pigments.

lonomer powder coatings may have limited temperature resistance for many applications, which is a key barrier for competing with nylon-11 or nylon-12 powder products. Ionomer powder is extremely difficult to grind even using cryogenic conditions, which adds cost. Due to the low melting point and a low degree of crystallinity, ionomer powders solidify slowly in a powder coating operation compared to other semicrystalline powder products. This reduces the production rate, such as in a fluidized bed coating operation.

There remains a need, therefore, for a thermoplastic polymer powder coating composition that functions well as a metal coating and/or metal primer coating and is easy to produce and apply to the metal as corrosion protection, while also having an appropriate balance of properties. A powder coating with all the physical advantages associated with a neutralized ethylene acid copolymer is needed that also provides suitable adhesion to metals, good weatherability and other desirable powder coating characteristics.

### Summary Of The Invention

The objective of this invention is to provide a polyamide and ionomer blend composition for powder coating applications having high adhesion to metal, high stiffness, hardness and toughness, good scratch resistance, low melt viscosity and high processability.

The invention provides a composition comprising a blend of
(1) a semicrystalline polyamide with a melting point in the range of 160 °C to 230 °C as measured according to differential scanning calorimetry (DSC) and a melt viscosity less than 500 Pa·sec, measured in a capillary rheometer at 250 °C and a shear rate of 12 sec⁻¹, in the range of 40 to 70 weight % of the combination of (1) and (2); and
(2) an ionomer in the range of 30 to 60 weight % of the combination of (1) and (2), wherein the ionomer comprises at least one partially neutralized acid copolymer, wherein the acid copolymer comprises, based on the total weight of the copolymer (i) 79 to 90 weight % of copolymerized units of an alpha-olefin; (ii) 10 to 21 weight % of copolymerized units of an alpha-beta unsaturated carboxylic acid; (iii) 0 to 7 weight % of copolymerized units of an optional third comonomer, such that the total of comonomers other than the alpha-olefin is present in the range of 10 % to 21 weight % of the copolymer; (iv) 20 mol % to 50 mol % of the total carboxylic acid groups are neutralized to salts comprising zinc cations and optionally cations of a second element (M2) that is different from Zn selected from Groups I of the Periodic Table of the Elements wherein the mole equivalents of zinc comprise at least 20 mole equivalent % of the total cation content; and (iv) the ionomer has a melt index in the range of 10 to 200 g/10 min., determined according to ASTM D-1238, measured at 190 °C using a 2.16 kg weight,
wherein the polyamide is nylon-6, nylon-12 or combinations thereof, and
wherein the polyamide has a relative viscosity (RV) of 1.6 to 2.7 measured (1% in 96% sulfuric acid) according to ISO Test Method 307.

Preferably, the composition is in the form of irregularly shaped particles having particle size in the range of 20 to 500 micrometers.

The composition is useful as a powder coating. The invention also provides a process for coating a metallic surface comprising the following steps:
(a) preparing a blend composition comprising a semicrystalline polyamide and an ionomer wherein the blend has a composition as described above; and
(b) applying the composition to the metallic surface or a layer on said surface to form a coating on said surface or said layer.

An embodiment of the process further comprises forming a powder from the blend composition having irregularly shaped particles by grinding the blend, the particles having a particle size in the range from 100 to 500 micrometers prior to applying the composition to the metallic surface or layer thereon.

The invention also provides a coated metal substrate comprising a metal layer where the metal may be iron, steel or aluminum or other known metals or alloys, a first coating of the metal-coating composition described above, and an optional outer coating, over the first coating, of polyethylene or polypropylene or an ethylene acrylic acid or methacrylic acid ionomer.

### Detailed Description

Unless stated otherwise, all percentages, parts and ratios, are by weight. Further, when an amount, concentration, or other value or parameter is given as either a range, preferred range or a list of upper preferable values and lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range. It is not intended that the scope of the invention be limited to the specific values recited when defining a range. When a component is indicated as present in a range having a lower limit of 0, such component is an optional component (i.e., it may or may not be present). Such optional components, when present, are included in an amount preferably of at least 0.1 weight % of the total weight of the composition or polymer.

When materials, methods, or machinery are described herein with the term "known to those of skill in the art", "conventional" or a synonymous word or phrase, the term signifies that materials, methods, and machinery that are conventional at the time of filing the present application are encompassed by this description. Also encompassed are materials, methods, and machinery that are not presently conventional, but that may have become recognized in the art as suitable for a similar purpose.

As used herein, the term "copolymer" refers to polymers comprising copolymerized units resulting from copolymerization of two or more comonomers and may be described with reference to its constituent comonomers or to the amounts of its constituent comonomers such as, for example "a copolymer comprising ethylene and 15 weight % of acrylic acid". Such a description may be considered informal in that it does not refer to the comonomers as copolymerized units; in that it does not include a conventional nomenclature for the copolymer, for example International Union of Pure and Applied Chemistry (IUPAC) nomenclature; in that it does not use product-by-process terminology; or for another reason. However, a description of a copolymer with reference to its constituent comonomers or to the amounts of its constituent comonomers means that the copolymer contains copolymerized units (in the specified amounts when specified) of the specified comonomers.

The term "(meth)acrylic acid" represents acrylic acid, methacrylic acid or combinations thereof.

To provide effective protection against corrosion, a coating should have good adhesion to the metal and should be relatively impermeable to agents that could, in themselves, cause corrosion of the metal or to agents which cause a loss of adhesion of the coating to the metal. Poor initial adhesion or subsequent loss of adhesion will allow the metal itself to become directly exposed to corrosive environments. Thus, both impermeability and long term adhesion are important characteristics of a good corrosion-prevention coating.

Coating materials differ in their advantages, however. Polyolefin thermoplastic coatings such as polyethylene or polypropylene are resistant to water and chemicals, but they do not adhere well to metals, and the scratch and abrasion resistance is poor as well. Nylon-11 and nylon-12 based powder coatings have excellent properties. However, they are very expensive. Also the scratch resistance may not be adequate for more demanding applications. Lower cost polyamides, such as nylon-6, are deficient in a number of performance properties for powder coating applications, such as poor scratch resistance, high water absorption, poorer weatherability, and poor adhesion to metal. In contrast, neutralized ethylene acid copolymers (ionomers), such as those from ethylene (meth)acrylic acid copolymers, provide a high level of adhesion to metals, are tough and provide good corrosion resistance to metals. However, powder coatings derived from ionomers are poor in temperature resistance, limiting their applications. Also, it is well known that ionomers are very difficult to convert into powder by cryogenic grinding and require much energy to produce suitable powders.

We have discovered that certain blends of polyamides and ionomers in powder form are suitable for use in powder coating applications with good adhesion to metal surfaces, low water absorption and high scratch resistance.

We have also found that blends of polyamides with mixed ion ionomers have the additional benefits of better scratch resistance and better melt flow than similar blends of nylon with single metal ionomers.

The powder coatings described herein comprise blends of polyamides and high melt flow neutralized ethylene acid copolymers which are further manipulated into powder form or particles and optionally blended with other suitable powder coating components to form a powder composition. The polyamide/high melt flow ionomer powder composition can be applied to a metal object to coat at least one metal layer or metallic surface area.

This powder composition is a blend of polyamide and ionomer that addresses in part the deficiencies of both pure components, while retaining most of their key merits. The blend of polyamide and ionomer provides high temperature resistance, fast crystallization, and improved cryogenic grinding, which have been deficient in previous ionomer powder coatings. The blend also provides reduced moisture absorption, enhanced adhesion to metals and improved scratch/abrasion resistance which have been deficient in previous nylon powder coatings. The blend can be ground into powder conveniently in a cryogenic grinding operation. The blend provides excellent appearance, high hardness, and weatherability and longevity with proper UV stabilization. The nylon and ionomer components in the blend allow for development of an FDA-approved powder coating.

The blend may comprise, consist essentially of, consist of, or be produced from, from a lower limit of 40 or 50 weight % to an upper limit of 65 or 70 weight % of a polyamide and from a lower limit of 30 or 35 weight % to an upper limit of 50 or 60 weight % of an ionomer, all based on the weight of the blend.

Polyamides from single reactants such as lactams or amino acids, referred as AB type polyamides are disclosed in Nylon Plastics (edited by Melvin L. Kohan, 1973, John Wiley and Sons, Inc.) and can include nylon-6, nylon-11, nylon-12, or combinations of two or more thereof. Polyamides prepared from more than one lactam or amino acid include nylon-6,12.

Well known polyamides prepared from condensation of diamines and diacids, referred to as AABB type polyamides include nylon-66, nylon-610, nylon-612, and nylon-1212 as well as from a combination of diamines and diacids such as nylon-66/610. Similarly, semiaromatic polyamides include poly(m-xylene adipamide) (such as nylon MXD6 from Mitsubishi Gas Chemical America Inc.) or amorphous polyamide produced from hexamethylene diamine and isophthalic/terephthalic acids such as SELAR® PA from DuPont.

Polyamides for use in the present invention are nylon-6, nylon-12 or combinations thereof, and notably nylon-6, provided that the polyamides exhibit the melting point, melt viscosity and relative viscosity limitations described below.

The polyamide is semicrystalline, with a melting point in the range of 160 °C to 230 °C, or from 165 to 230 °C, as measured according to differential scanning calorimetry (DSC), and a melt viscosity less than 500 Pa·sec, preferably less than 400), more preferably less than 300, and most preferably less than 200 Pa·sec at a shear rate of 12 sec⁻¹, all measured at 250 °C.

A capillary viscosity measurement is most suitable to be used for selecting a polyamide with suitable melt viscosity. Preferably, the polyamide comprises nylon-12 with a melt viscosity less than 300 Pa·sec, measured in a capillary rheometer at 250 °C and a shear rate of 12 sec⁻¹. For example, a low melt viscosity nylon-12 such as Rilsan® AMNO from Arkema is suitable for this application, while a high melt viscosity nylon-12 such as Rilsan® AESNO from Arkema is not suitable.

The polyamide has a relative viscosity (RV) of 1.6 to 2.7, preferably from 1.8 to 2.4. Relative viscosity is related to melt viscosity. Varied methods may be used for measured RV values, and not all commercial polyamides list the RV values. For example, the RV of nylon-6 is measured (1% in 96% sulfuric acid) according to ISO Test Method 307. Preferably, the polyamide comprises nylon-6 having a RV of 1.8 to 2.4 measured (1% in 96% sulfuric acid) according to ISO Test Method 307. Thus nylon-6 most commonly used for extrusion applications, which require a higher RV, is not suitable. For example, grades of nylon-6 targeted for extrusion (such as Ultramid® B33 from BASF) with a RV of around 3.3 are not suitable for powder coating applications. Molding grades of nylon-6 (such as Ultramid® B27 from BASF) with a RV of around 2.7 may be just within the range suitable for this application. Some fiber grades with lower RV (such as Ultramid® B24 from BASF) with a RV of 2.4 are most suitable to be used.

Polyamides and processes for making them are well known to those skilled in the art, so the disclosure of such is omitted in the interest of brevity.

The ionomer used in the blend comprises a copolymer comprising copolymerized units of an alpha-olefin, copolymerized units of an α,β-unsaturated monocarboxylic acid such as acrylic acid or methacrylic acid in an amount from 10 to 21 weight % of the total weight of the copolymer, and an optional comonomer in an amount of 1 to 7 weight % of the total weight of the copolymer, such that the total of comonomers other than the alpha-olefin is present is in the range of 10 to 21 weight % of the copolymer. Of note are copolymers, including dipolymers, with 14 to 21 weight % of acrylic acid or methacrylic acid.

Suitable alpha-olefins which may be used in the preparation of the contemplated ionomers are ethylene, propylene, butene-1, pentene-1, hexene-1, heptene-1,3-methylbutene-1, and 4-methylbutene-1. The preferred alpha-olefin is ethylene.

The optional comonomer (that is, the comonomer may or may not be present in the copolymer) can be one or more alkyl acrylate or alkyl methacrylate having 1 to 12 or 1 to 8 carbons in the alkyl group, preferably 1 to 4 carbons in the alkyl group, such as methyl acrylate, ethyl acrylate and n-butyl acrylate. When present, the alkyl (meth)acrylates can be present in amounts from 1 to 7 weight % of the copolymer, such as 1 to 5 weight %.

Examples of copolymers include dipolymers of ethylene and acrylic acid, dipolymers of ethylene and methacrylic acid, terpolymers of ethylene, methacrylic acid and alkyl acrylates, and terpolymers of ethylene, acrylic acid and alkyl acrylates, or combinations thereof.

Methods for preparing ionomers from acid copolymers are well known in the art (see for example U.S. Patent 3,264,272).

The melt index of an ionomer is dependent on the melt index of the precursor acid copolymer and the neutralization level. The melt index of the precursor acid copolymer is, among other factors, related to the average molecular weight of the polymer. Suitable ionomers may be readily prepared by neutralization of an ethylene acid copolymer wherein the melt index (MI) prior to neutralization ranges from 100 to 1,000 g/10 min, determined according to using ASTM D-1238, measured at 190 °C using a 2.16 kg weight. Preferably the MI of the acid copolymer prior to neutralization is from 150 to 500 g/10 min. at 190° C. From 20 to 50 mole %, or 20 to 40 mole % of the carboxylic acid functionalities in the ethylene copolymer are neutralized to salts comprising one or more alkali metal or zinc cations. After neutralization, the ionomer has a melt index in the range of 10 to 200 g/10 min, measured at 190 °C using a 2.16 kg weight, preferably 30 to 100 g/10 min. Suitable ionomers have melt flow rates that are higher than and/or neutralization levels that are lower than found for commercially available SURLYN® ionomers.

The neutralized acid copolymer comprises cations of zinc (Zn) and preferably, the neutralized acid copolymer comprises a mixed metal salt of Zn cations and a second cation (M2) that is different from Zn, selected from Group I of the Periodic Table of the Elements; and the zinc content is at least 20 mole equivalent % of the total cation content. Preferred are compositions wherein M2 is sodium, lithium or a mixture thereof; more preferably M2 is sodium. Certain mixed ion ionomers are described in greater detail in U.S. Patent 6,680,082.

Mixed ion ionomers may provide a combination of better properties for the blends with polyamides than ionomers comprising a single type of cation. For example, a zinc/sodium mixed ion ionomer blended with polyamide may provide lower water sorption and improved adhesion to metal than that provided by a corresponding ionomer containing only sodium. The zinc/sodium ionomer may also provide higher hardness and higher mechanical strength than that provided by a corresponding ionomer containing only zinc.

The high melt flow ionomer is melt blended, such as in an extruder, with a polyamide described above to provide a blend composition. Without being bound by any theory, it is believed that the presence of the ionomer may greatly enhance bonding of the composition to the metal and between any metal surfaces and any subsequent polymer or metal layer(s). The ionomer also provides higher scratch resistance and lower water absorption for the blend than the corresponding polyamide without ionomer.

Additional excipients are active coating ingredients which may be added to the polyamide/ionomer blend. For example, the composition may contain stabilizers, pigments, flow additives, lubrication and/or abrasion resistance additives and fillers. The relative percentages of these excipients may be varied depending upon the particular use of the object to be coated, but may be present in the final powder coating composition in amounts from 0.01 weight % to 5, 10, 20, or 30 weight % or even higher. The additives can be added to the polymeric composition in typical melt compounding equipment prior to the size reduction step described below. Pigments and flow additives can be added to the powder by dry blending and/or during melt compounding. Other additives may be added during the ionomer neutralization step.

Suitable stabilizers include antioxidants, such as the IRGANOX® family produced by Ciba-Geigy (now a part of BASF), and UV stabilizers such as those sold under the TINUVIN® tradename by Ciba-Geigy or CYASORB® light stabilizer and light absorber produced by Cytec. Preferred antioxidants are based on hindered phenols, and the preferred UV stabilizers are based on hindered amine light stabilizers (HALS). Suitable pigments include both inorganic and organic pigments that provide desirable color, such as titanium dioxide for providing white color.

Suitable flow additives or flow control agents include acrylate copolymers, fluorocarbons and silicones. A preferred modifier is micrometerized fluorocarbon, such as tetrafluoroethylene polymers, for providing lubricity and abrasion resistance.

Fillers may be present in the coating compositions described herein. The shape, size, and size distribution of the filler all impact its effectiveness, though, at high levels, the particular characteristics of the filler become less important. Suitable fillers include mineral fillers such as inorganic oxides, carbonates, sulfates or silicates of a metal of Groups IA, IIA, IIIA, IIB, VIB or VIII of the periodic table of the elements. The preferred fillers are calcium carbonate, barium sulfate and magnesium silicate. Particulate fillers, particularly those laminar in shape, are commonly used in coatings to improve corrosion resistance. They aid in reducing differential coefficient of expansion and may reduce permeability by increasing tortuosity of the path that would be required for a fluid to permeate the coating.

Particulate zinc is known as a filler for use in coatings and paints. It is particularly advantageous because it has yet another corrosion protective function related to its reduction potential. Use of zinc itself as a protective coating is known and conventional, particularly with steel because of its reduction or galvanizing potential. Zinc flakes and powder appear to be highly suitable as fillers.

Small filler particle size facilitates preparation of uniform coatings. For example the particles are preferably less than 400 micrometers maximum diameter, and most preferably less than 45 micrometers. The polymer composition may be mixed with the filler using well known melt mixing methods employing extruders or other suitable mixers such as Banbury or Farrel continuous mixers or roll mills.

The amount of filler, if present, can vary widely. Above 80 weight % of particulate filler, based on the weight of the thermoplastic polyamide/ionomer blend plus filler, properties such as flexibility, ductility, elongation and tensile strength of the filled material drop off rapidly. A small amount of filler (from 2, 5 or 10 weight % to 30 weight %) may be sufficiently advantageous for some coating environments or end uses, while in other cases high levels (up to 82 weight %) of a particular filler such as a reducing filler like zinc may be preferable.

These blends have excellent impact toughness, flexibility, cut and abrasion resistance, low temperature performance and long term durability, especially at specific gravities of less than one. The resin blends are insoluble in water and may be prepared in the form of a powder for application to metal and/or metal surfaces.

The thermoplastic polyamide/ionomer composition may be applied to a metal surface by pressure laminating, vacuum laminating, extrusion coating, flame spraying or any other method suitable for thermoplastic coating.

Once the polyamide/ionomer blends are prepared as described above, they may be further made into powder for application to metal surfaces either as a single component or in a composition containing additional coating excipients. The preparation of the powder is accomplished by grinding the dried polyamide/ionomer blend. Grinding creates a new physical form which is suitable for use as a powder coating for metal or metal containing objects in the recited composition ranges. Surprisingly, in view of the known difficulty in grinding ionomers, the polyamide/ionomer blend is easily ground. Cryogenically grinding using liquid nitrogen as a cooling medium is the preferred manufacturing process for the powder. Physically grinding the resin creates irregularly shaped particles of size and shape suitable for achieving constant flow through the application equipment. For obtaining such a suitable size, the grinding step is associated with a sieving step for eliminating the large particles and fine size particles. The desired particle size is in the range of 20 to 500 micrometers. For fluid bed coating processes, the preferred particle size is 75 to 350 micrometers. For electrostatic spraying applications, the preferred particle size is 20 to 120 micrometers.

The process preferably does not include a step of contacting the ionomer with ammonia, or intentional formation of spherical particles comprising ammonium salts. The formation of spherical ammonium copolymer salts does nothing to enhance the process in this instance since the copolymers are cryogenically ground, thereby forming irregularly shaped particles. Hence it is considered counterproductive to intentionally form spherical particles only to grind them into irregular shapes. Furthermore, inclusion of ammonia or ammonium salts is also considered detrimental to good adhesion of the polyamide/ionomer blends to metal surfaces.

Examples of other fine powders which may be added to the polyamide/ionomer blend include organic pigments, such as azo, phthalocyan, indanthrene and dye lake pigments, inorganic pigments such as oxide pigments, e.g., titanium oxide, chromomolybdic acid, sulfide selenium compound, ferrocyanide and carbon black pigments; and powders such as aluminum oxides, aluminum hydroxides and calcium carbonate. Among them, the pigments are preferred because they can maintain good powder flowability and color the molded article even when used in a small amount, which enables a subsequent coloring step to be omitted.

Powders and coatings prepared from the blends described herein are highly resistant to chemical attack and permeation by liquids. They have high melt strengths and adhere well to metals and to finishes of epoxy and urethane. The blends can be in the form of a powder having a particle size or average particle size of 20 to 500 micrometers. Self-adhesive thermoplastic coating powders can be processed for fluid bed or electrostatic spraying or flame spray or additional methods known in the art.

Once the powder coating or powder coating composition is prepared as described above, it may be applied to metal surfaces or multilayer structures by known powder application means. The powder is preferably processed for fluid bed or electrostatic spraying or flame spray.

This invention relates to thermoplastic anti-corrosion coatings, particularly primer coatings for metals wherein the coating comprises a polyamide/mixed ion ionomer blend as discussed above. The blend is put into powder form for coating onto metal, optionally with filler such as zinc and applied as a thermoplastic coating to prevent corrosion of metals.

The powder coating can be applied to the surface of metal components. The metals that provide the metallic surface as a substrate for applying the polyamide/mixed ion ionomer blend powder include iron, steel, galvanized steel, ferrous alloy, aluminum, aluminum alloy, tin, copper, bronze, lead, zinc, mixtures of these or any other metal surfaces. The metal surface can be a metal or alloy or can be treated first with an anticorrosive and/or antioxidant agent such as a metal-containing salt or metal oxide, which is then coated with the powder coating.

In coating metals with plastic coatings, it is normal to first sandblast the metal and/or clean the metal surface with solvents to help remove grease or oxide layers. In addition, washing with various silanes, such as gammaaminopropyltriethoxysilane, may help in reducing any adverse effect of moisture at the metal/coating interface. Metal pre-treatment is preferred to allow for good adhesion of the coating to the metal.

As described above, the blends are manipulated into powder form suitable for applying to metal layers or surfaces in sufficient amount to provide a protective layer. The thickness of the layer(s) may vary depending upon the anticipated application and end use. Coating thickness may range from 5 to 50 mils (0.13 to 1.25 millimeters). Coatings as thin as 5 to 10 mils (0.13 to 0.25 millimeters) may be entirely suitable. Multiple layers of the powder may be applied to the metal surface. Thicker coatings, which generally provide better protection of the coated metal, can be applied without the problems presented by the brittleness of thermoset epoxy resins.

The polyamide/ionomer blend may be used as a coating alone, i.e., a sole coating, especially with a filler. Since the blend adheres well to metal and also to other ethylene polymers or copolymers, it can also serve as a primer coating on metal. An outer coating of ethylene polymer or copolymer may be used over the polyamide/ionomer primer coating. Preferably, the polyamide/ionomer blend is used as an outer coating directly applied to the metal object. In addition, the polyamide/ionomer coating composition may serve as an intermediate coating layer on a metal object if the metal is previously coated with a primer coating selected from the same coating composition or a different coating composition including coatings of metal oxides or sulfates.

Adhesion and permanence of that adhesion to metals are complex phenomena. Loss of adhesiveness may be due to mechanical or chemical causes. Differential thermal expansion of the metal and the coating can cause mechanical failure of the bond between them, while many agents can attack the metal-coating bond. Since all of the qualities of a good coating (relative impermeability to potentially corrosive agents plus good and lasting adherence under a wide range of conditions) are not always possible in one coating, it is common to use primer coatings between the metal and an outer plastic coating to provide permanent adhesion between the metal and outer coating, yet maintain the advantages of the outer coating. Thermoset epoxy compositions are among the preferred materials for primers.

This invention relates to a method of protecting iron, steel or aluminum or other metals against corrosion which comprises applying onto the metallic surface a powder form of a blend of polyamide and high melt flow ionomer as described above.

The powder coating can be used in a broad range of applications that require corrosion resistance, abrasion and wear resistance, impact resistance and chip resistance. The coating provides maximum protection along with an aesthetically pleasing high gloss surface. This thermoplastic blend of polyamide and high melt flow ionomer may be applied to many parts of automobiles and domestic appliances and may also be applied to any metal surface on automobile parts or other fabricated metal components or parts. The powder provides corrosion protection for metal parts on automobiles, offshore installation structures, drinking water supply pipes, etc.

This invention further relates to a multilayer coated metal substrate, including substrates in the form of a tube (or pipe), and more particularly to a metal tube having an outer surface coated with a plurality of layers of plastic material securely bonded thereto. Metal tubes often have their outer surfaces covered with a protective coating. These tubes may be used for conveying brake fluids, fuel and the like in a motor vehicle. As such, these tube or pipe lines are located under the body of the vehicle. Since they are used in such a harsh environment, the tubes are required to have a high degree of corrosion resistance, scratch resistance, impact strength and mechanical wear resistance. In cold climates, it is not unusual to encounter rock salt sprinkled onto road surfaces in order to prevent freezing of water on the road surfaces and the inherent dangers caused thereby. The popularity of spreading rock salt has created a serious problem of tube and pipe corrosion. The tubes are also vulnerable to damage or wear from stones or mud spattered by rotating wheels of the vehicle. It is necessary, therefore, that the tubes attached to the underbody of the vehicle be coated so as to resist both chemical corrosion and mechanical damage or wear.

The following Examples further exemplify the features of the invention and are to be construed in a non-limiting manner.

### EXAMPLES

### Materials Used

PA-6-1: Nylon-6 available commercially as ULTRAMID® B27 from BASF, with reported high melt flow (RV of 2.67-2.73) and melting temperature of 220 °C.
PA-6-2: Nylon-6 available commercially as ULTRAMID® B24 from BASF, with reported high melt flow (RV of 2.4-2.46) and melting temperature of 220 °C.
PA-6-3: Nylon-6 available commercially as ULTRAMID® B33 from BASF, with reported lower melt flow (RV of 3.19-3.41) with melting temperature of 220 °C.
PA-12-1: Nylon-12 with high melt flow available commercially as Rilsan® AMNO from Arkema, with melting temperature of 174-180 °C.
PA-12-2: Nylon-12 with lower melt flow available commercially as Rilsan® AESNO from Arkema, with melting temperature of 174-180 °C.
ION-1: a Na ionomer based on an ethylene methacrylic acid dipolymer with 19 weight % of MAA, neutralized to salt with Na cation (45 mole % neutralization) and with a MFI (190 °C) of 4.5.
ION-2: a Zn ionomer based on an ethylene methacrylic acid dipolymer with 19 weight % of MAA, neutralized to salt with Zn cation (36 mole % neutralization) and with a MFI (190 °C) of 4.5.
ION-3: A Zn/Na (75/25 mole %) mixed ion ionomer based on an ethylene methacrylic acid dipolymer with 19 weight % of MAA, neutralized to salts with Zn and Na cations (30 mole % neutralization) and with a MFI (190 °C) of 36.1 and MFI (200 °C) of 50.2.
Zn.St.: Zinc stearate, commercial grade.
TS-1: A blend of a hindered phenolic antioxidant and a phosphate used as a thermal stabilizer, available commercially as Irganox® B1171 from CIBA, now part of BASF.
UVS-1: N-(2-ethoxyphenyl)-N'-(2-ethylphenyl) ethanediamide, used as an ultraviolet light absorber, available commercially as Tinuvin® 312 from CIBA.
UVS-2: Bis(2,2,6,6,-tetramethyl-4-piperidyl)sebaceate used as an ultraviolet light absorber, available commercially as Tinuvin® 770 from CIBA.

Listed in Table 1 are the melt viscosities measured at 250 °C at various shear rates of representative nylon-6 and nylon-12 for selecting the polyamide component. Both PA-6-3 and PA-12-2 are extrusion grades, while PA-6-1 and PA-12-1 are molding grades with significantly lower melt viscosities. Also listed is PA-6-2, a very low melt viscosity nylon-6. Melt viscosity was measured at 250 °C using a Kayeness melt rheometer of a 0.04 inch x 0.8inch 20/1 L/D orifice. There was a six minute holdup/melt time in the rheometer barrel before measurements were taken. Melt viscosity (shear viscosity) was measured at shear rates from 12 second⁻¹ to 3003 second⁻¹. Also included is the melt viscosity of ION-3 measured at 200 °C.

**Table 1 Melt viscosity at 250 °C (Pa·sec)**

| | Shear rate (sec⁻¹) | | | | | | |
|---|---|---|---|---|---|---|---|
| Sample | 3003 | 1194 | 475 | 186 | 81 | 35 | 12 |
| PA-6-1 | 121 | 185 | 248 | 301 | 330 | 385 | 437 |
| PA-6-2 | 88 | 117 | 127 | 149 | 154 | 168 | 183 |
| PA-6-3 | 185 | 332 | 528 | 746 | 921 | 1100 | 1265 |
| PA-12-1 | 61 | 78 | 90 | 99 | 106 | 117 | 135 |
| PA-12-2 | 201 | 377 | 64 1 | 1011 | 1 42 7 | 1981 | 2834 |
| ION-3 (at 200 °C) | 71 | 91 | 151 | 192 | 230 | 272 | 319 |

In the examples below molding grades of nylon-6 (PA-6-1) and nylon-12 (PA-12-1) were used. Compositions comprising a fiber grade of nylon-6 with lower melt viscosity (PA-6-2) were also prepared. The melt viscosities of PA-6-3 and PA-12-2 were considered too high to be suitable for powder coating compositions.

Plaque specimens of 3 inch x 3 inch x 0.125 inch (7.6 cm x 7.6 cm x 0.3 cm) were molded on an Arburg 221K, 38 ton injection molding machine with a 1.5 oz barrel. Barrel and nozzle temperature settings were 230-260 °C. Mold temperature was approximately 25 °C. Injection pressure was adjusted based on the melt viscosity of the sample being molded.

### Test Methods

Melt Flow Index (MFI) was measured using ASTM D-1238 using a 2160 gram weight measured at the temperature indicated.

Hardness (Shore D) was measured using ASTM D-2240 on the injection molded plaques.

Water sorption was measured by immersing molded plaques in deionized water for 7 days at room temperature. The plaques were removed from the water and the surface blotted dry to determine weight gain. The samples were also examined for any changes in appearance. In a separate test, the molded plaque specimen was immersed in water at 80 °C for four hours. The water gain was measured and the specimen was also examined for any changes in appearance.

Scratch resistance testing was measured using the method ISO 1518 on specimens of the injection molded plaques. A needle with a tip diameter of 1mm was moved with a constant speed over the test surface (the plaque specimen) while applying a load between 0 and 20 N (Newton). The value indicated is the lowest load that after being applied created a visible, permanent scratch. The accuracy of this test is +/- 1 N.

Table 2 lists the comparative resin examples and polyamide/ionomer blend compositions that, in the latter case, are precursors to the mixed metal powder compositions. Comparative Examples C1, C2 and C3 are representative high melt flow nylon-12, high melt flow nylon-6 (PA-6-1) and a mixed ion ionomer of high melt flow index compared to commercially available ionomers. Also included in Table 2 are blends of ionomers with nylon-6 having two different melt viscosities with ionomers and nylon-12. For nylon-6 and nylon-6 blends, the melt flow index was measured at 240 °C. For nylon-12 and nylon-12 blends, the melt flow index was measured at 200 °C.

Comparative Example C2, nylon-12, has a high MFI of 19.1 (200 °C), a Shore D Hardness of 73, and a low water absorption measured at both room temperature and at 80 °C. Comparative Example C1, nylon-6, has a high MFI of 27.8 (240 °C), a Shore D Hardness of 78, but absorbed a higher amount of water. High water absorption, poorer scratch resistance and poorer impact resistance limit the use of less expensive nylon-6 in many protective powder coating applications. Both Comparative Example 1 and Comparative Example 2 showed mediocre scratch resistance. Comparative Example 3 is an ionomer of high MFI that is suitable for powder coating. It has a high MFI of 50.2 (200 °C), and despite a Shore D Hardness of 64, it has excellent scratch resistance. However, Comparative Example C3 had limited temperature resistance. The testing plaque deformed in the 80 °C water testing due to its low melting point.

**Table 2**

| | | Melt Flow Index | | Hardness | Water Sorption (% weight gain) | | Scratch resistance |
|---|---|---|---|---|---|---|---|
| Example | Composition (weight %) | 200 °C | 240 °C | Shore D | 7 days (23 °C) | 4 hrs (80 °C) | (Newton) |
| C1 | PA-6-1 | | 27.8 | 78 | 4.4 | 3.69 | 4N |
| C2 | PA-12-1 | 19.1 | | 73 | 0.4 | 0.61 | 6N |
| C3 | ION-3 | 50.2 | | 64 | 0.5 | 0.21* | 16N |
| C4 | PA-6-1/ION-2 (55/45) | | 7.3 | 70 | 0.3 | 1.23 | 8N |
| C5 | PA-6-1/ ION-1/ION-2 (55/12/33) | | 9.7 | 72 | 0.5 | 1.17 | 14N |
| C6 | PA-6-1/ ION-1/ION-2 (60/10/30) | | 10.2 | 74 | 0.6 | 1.36 | 12N |
| 1 | PA-6-1/ION-3 (60/40) | | 36.1 | 72 | 0.4 | 1.39 | 12N |
| 2 | PA-6-1/ION-3 (55/45) | | 39.6 | 70 | 0.4 | 1.27 | 10N |
| 3 | PA-12-1/ ION-3 (60/40) | 19.7 | | NA | NA | NA | 14N |
| 4 | PA-12-1/ ION-3 (55/45) | 23.3 | | 68 | 0.2 | 0.44 | 10N |
| 5 | PA-6-2/ ION-3 (55/45) | | 58.1 | | | | |
| 6 | PA-6-2/ ION-3 (60/40) | | 46.3 | | | | |
| C7 | PA-12-1/ ION-1/ ION-2/Zn.St. (55/12/33/0.5) | 14.7 | | 67 | 0.1 | 0.44 | 10N |
| | *sample deformed | | | | | | |

Also as shown in Table 2, samples of nylon-6 blended with ionomers, Comparative Examples C4, C5 and C6 and Examples 1 and 2, surprisingly all showed much reduced water absorption compared to neat nylon-6 (Comparative Example C1). The water absorption after 7 days immersion in water at room temperature was in the same range as that of the nylon-12 sample (Comparative Example C2). Water absorption was also similar to that of the ionomer(s), the minor component in the blends. The mixed ion blend of ionomers (Comparative Example C5) compared to the single ion blend (Comparative Example C4) shows the potential benefit of blending nylon with mixed ion ionomers. The mixed ion blend provided somewhat improved melt flow and scratch resistance without significantly impacting hardness or water absorption. The nylon-12 blend samples, Comparative Example C7 and Examples 3 and 4, absorbed less water than either of the individual components. Surprisingly, there is a synergy of the polyamide and the ionomers in reducing water absorption for the blend samples. All the blend samples remained intact after immersion in 80 °C water for 4 hours. This water sorption behavior is significantly better than either the nylon components or the high melt flow ionomer component of each blend.

All the blend samples exhibited much higher scratch resistance than either the nylon-6 sample or the nylon-12 sample.

The results summarized in Table 2 demonstrate that the blend compositions all exhibit excellent scratch resistance, low water absorption, and temperature resistance needed for powder coating application. The scratch resistance is far better than the parent nylon samples, and the presence of an ionomer greatly alleviates the high moisture absorption of polyamides. However, some of the blend compositions, while showing interesting properties, may not have adequate melt flow for powder coating operations.

A composition suitable for a powder coating resin desirably exhibits a near-Newtonian melt viscosity. It is desirable to establish an understanding on how low the melt viscosity of a polyamide/ionomer blend can reach while still retaining required properties. During powder coating operations, the polymer melt encounters a very low shear rate. For a thermoplastic resin, it is a challenge to attain both very high melt flow and adequate properties such as impact and scratch resistance.

For powder coating, both the fluidized bed coating process and electrostatic spraying process require powder resins of high MFI. Comparative Examples C4 to C6 are blends of nylon-6 with ionomers of melt index less than 10 g/10 min (190 °C). These Comparative Examples all had MFI too low to provide good powder coating compositions and are therefore not suitable as powder coating resins. Preferably, nylon/ionomer powder compositions have melt flow index greater than 15 g/10 min., measured at 200 °C. Alternatively, they have melt flow index preferably greater than 25 g/10 min., more preferably greater than 40 g/10 min., measured at 240 °C. Compositions useful for powder coating may have melt index up to 100 g/10 min. measured at 200 °C, or 200 g/10 min. measured at 240 °C. Compositions with too higher melt index may have poor physical properties such as scratch resistance and impact resistance.

Compositions with higher MFI ionomers provide nylon-6/ionomer compositions with MFI suitable for use in powder coating compositions (Examples 1, 2, 5 and 6). Comparative Example 7 is a blend of low MFI ionomers with nylon-12 modified with zinc stearate as a lubricant, having MFI that may be suitable for powder coating under certain conditions, but may be too low to provide good powder coating performance under typical powder coating conditions. Compositions with higher MFI ionomers provide nylon-12/ionomer compositions with MFI suitable for use in powder coating compositions (Examples 3 and 4). This evaluation indicates that only blends of ionomers with high melt flow index and polyamides with low melt viscosity (low RV) are suitable for powder coating.

### Powder Coating Compositions

Three blend compositions exhibiting high melt index among the nylon-6-based samples and the nylon-12-based samples, Examples 1, 2 and 4 of Table 2, were evaluated as powder coatings.

For evaluating the compositions, a proper stabilizer package comprising antioxidants and light stabilizers was added and the examples were melt blended in an extruder to produce granules. The compositions are summarized in Table 2, with the components indicated as parts by weight. MFI is also reported for the blend composition. The three samples were ground very well in a PPL 18 cryogenic mill. The resulting powder samples were sieved with screens of 315 micrometers and then 150 micrometers. The distribution of powder particle sizes after grinding is listed in Table 3.

**Table 3**

| Example | 1S | 2S | 4S |
|---|---|---|---|
| Polymer Blend | 100 | 100 | 100 |
| TS-1 | 0.225 | 0.225 | 0.15 |
| UVS-1 | 0.225 | 0.225 | 0.15 |
| UVS-2 | 0.6 | 0.6 | 0.4 |
| MFI | 10.7 (230 °C) | 17.7 (230 °C) | 17.2 (190 °C) |
| Granules before grinding | 19 Kg | 16.1 Kg | 18 Kg |
| powder > 315 micrometers | 6.7 Kg | 6.8 Kg | 6.2 kg |
| 150 micrometers < powder < 315 micrometers | 7.6 Kg | 9.3 Kg | 5.8 Kg |
| powder < 150 micrometers | 4.5 Kg | | 6.2 kg |

### Powder coating

Powders of particle size between 150 and 315 micrometers were used for evaluating coating applications after having removed both the coarse particles (> 315 micrometers) and fine particles (< 150 micrometers).

The metallic plates used were 150 mm x 70 mm x 1.5 mm steel plates. The steel plates were degreased with methyl ethyl ketone before being placed in an oven set at 335 to 340 °C and heated for 5 to 10 minutes for reaching equilibrium). No primer was applied to the steel plates. After heating, the steel plates were dipped for a few seconds in a fluidized bed of the coating composition, removed and cooled to room temperature. The following are the observation of the results.

For coating Examples 1S and 2S using PA-6-1, the adhesion to metal was good but the coating was not smooth. Modification of the powder coating conditions may improve the coating appearance. Preferably, a nylon-6 of lower melt viscosity (lower RV) such as PA-6-2 can be used in the nylon/ionomer blends (Examples 5 and 6).

For coating Example 4S using PA-12-1, the coating on the steel plate was smooth and even. The adhesion of the coating powder was measured according to ISO 4624 (dolly test). The adhesion was above 12 N/mm.

## Claims

1. A composition comprising a blend of
(1) a semicrystalline polyamide with a melting point in the range of 160 °C to 230 °C as measured according to differential scanning calorimetry (DSC) and a melt viscosity less than 500 Pa·sec, measured in a capillary rheometer at 250 °C and a shear rate of 12 sec⁻¹, in the range of 40 to 70 weight % of the combination of (1) and (2); and
(2) an ionomer in the range of 30 to 60 weight % of the combination of (1) and (2), wherein the ionomer comprises at least one partially neutralized acid copolymer, wherein the acid copolymer comprises, based on the total weight of the copolymer (i) 79 to 90 weight % of copolymerized units of an alpha-olefin; (ii) 10 to 21 weight % of copolymerized units of an alpha-beta unsaturated carboxylic acid; (iii) 0 to 7 weight % of copolymerized units of an optional third comonomer, such that the total of comonomers other than the alpha-olefin is present in the range of 10 % to 21 weight % of the copolymer; (iv) 20 mole % to 50 mole % of the total carboxylic acid groups are neutralized to salts comprising zinc cations and optionally cations of a second element (M2) that is different from Zn selected from Groups I of the Periodic Table of the Elements wherein the mole equivalents of zinc comprise at least 20 mole equivalent % of the total cation content; and (iv) the ionomer has a melt index in the range of 10 to 200 g/10 min., determined according to ASTM D-1238, measured at 190 °C using a 2.16 kg weight,
wherein the polyamide is nylon-6, nylon-12 or combinations thereof, and
wherein the polyamide has a relative viscosity (RV) of 1.6 to 2.7 measured (1% in 96% sulfuric acid) according to ISO Test Method 307.

2. The composition according to claim 1 wherein the alpha-olefin is ethylene and the carboxylic acid is selected from methacrylic acid or acrylic acid.

3. The composition according to claim 1 or 2 wherein the neutralized acid copolymer comprises mixed metal salts of cations of zinc (Zn) and cations of a second element (M2) that is different from Zn selected from Group I of the Periodic Table of the Elements, preferably sodium, lithium or a mixture thereof, more preferably sodium; and the zinc content is at least 35 mole % of the total cation content.

4. The composition according to claim 1, 2, or 3 wherein the polyamide is nylon-6 having a relative viscosity (RV) of 1.8 to 2.4 measured (1% in 96% sulfuric acid) according to ISO Test Method 307.

5. The composition according to claim 1, 2, or 3 wherein the polyamide is nylon-12 with a melt viscosity less than 300 Pa·sec, measured in a capillary rheometer at 250 °C and a shear rate of 12 sec⁻¹.

6. The composition according to claim 1, 2, 3, 4, or 5 wherein the blend comprises a powder composition having irregularly shaped particles in the range from 20 to 500 micrometers.

7. The composition according to claim 1, 2, 3, 4, 5, or 6 having a melt flow index greater than 15 g/10 min. measured at 200 °C with a 2.16 kg weight; preferably greater than 25 g/10 min. or more preferably greater than 40 g/10 min., measured at 240 °C with a 2.16 kg weight.

8. The composition according to claim 1, 2, 3, 4, 5, 6, or 7 wherein the composition includes at least 2 weight % of filler.

9. A method of coating a metallic surface comprising the steps:
(a) preparing a blend composition comprising a semicrystalline polyamide and an ionomer wherein the blend has a composition according to claim 1, 2, 3, 4, 5, 6, 7, or 8; and
(b) applying the composition to the metallic surface or a layer on said surface to form a coating on said surface or layer.

10. The method of claim 9 further comprising forming a powder having irregularly shaped particles from the blend composition by grinding the blend, the particles having a particle size in the range from 100 to 500 micrometers prior to applying the composition to the metallic surface or layer thereon.

11. The method according to claim 9 or 10 wherein applying the composition as a powder comprises using a fluidized bed of the powder composition or electrostatic spraying, or wherein applying the composition comprises pressure laminating, vacuum laminating, extrusion coating or flame spraying.

12. A coated metal substrate comprising a metal layer, a first coating of the composition according to claim 1, 2, 3, 4, 5, 6, 7, or 8, and an optional outer coating over the first coating, comprising polyethylene or polypropylene or an ionomer of a copolymer comprising copolymerized units of ethylene and acrylic acid or methacrylic acid.

13. The coated metal substrate according to claim 12 wherein the metal is iron, steel, aluminum or metal alloy.

14. The coated metal substrate according to claim 12 or 13 that is in the form of a tube.

## Patentansprüche

1. Zusammensetzung, umfassend eine Mischung von
(1) einem semikristallinen Polyamid mit einem Schmelzpunkt im Bereich von 160° bis 230 °C, gemessen gemäß Differentialscanningkalorimetrie (DSC), und einer Schmelzviskosität von weniger als 500 Pa•s, gemessen in einem Kapillarrheometer bei 250 °C, und einer Scherrate von 12 s⁻¹, in dem Bereich von 40 bis 70 Gew.-% der Kombination von (1) und (2); und
(2) einem Ionomer im Bereich von 30 bis 60 Gew.-% der Kombination von (1) und (2), wobei das Ionomer mindestens ein teilweise neutralisiertes Säurecopolymer umfasst, wobei das Säurecopolymer bezogen auf das Gesamtgewicht des Copolymers umfasst: (i) 79 bis 90 Gew.-% copolymerisierte Einheiten eines alpha-Olefins; (ii) 10 bis 21 Gew.-% copolymerisierte Einheiten einer alpha-beta-ungesättigten Carbonsäure; (iii) 0 bis 7 Gew.-% copolymerisierte Einheiten eines optionalen dritten Comonomers, sodass die Gesamtheit der Comonomere, die vom α-Olefin verschieden sind, im Bereich von 10% bis 21 Gew.-% des Copolymers vorliegen; (iv) 20 Mol-% bis 50 Mol-% der Gesamtheit der Carbonsäuregruppen zu Salzen neutralisiert sind, die Zink-Kationen und wahlweise Kationen eines zweiten, von Zn verschiedenen Elements (M2) umfassen, das ausgewählt ist aus den Gruppen I des Periodensystems der Elemente, wobei die Moläquivalente von Zink mindestens 20% Moläquivalente des gesamten Gehalts an Kationen umfassen; und (iv) das Ionomer einen Schmelzindex im Bereich von 10 bis 200 g/10 min. hat, bestimmt entsprechend dem Standard ASTM D-1238, gemessen bei 190 °C unter Verwendung eines Gewichts von 2,16 kg,
wobei das Polyamid Nylon-6, Nylon-12 oder Kombinationen davon ist, und
wobei das Polyamid eine relative Viskosität (RV) von 1,6 bis 2,7 hat, gemessen (1% in 96% Schwefelsäure) nach ISO-Testmethode 307.

2. Zusammensetzung nach Anspruch 1, wobei das α-Olefin Ethylen ist und die Carbonsäure ausgewählt ist aus Methacrylsäure oder Acrylsäure.

3. Zusammensetzung nach Anspruch 1 oder 2, wobei das neutralisierte Säurecopolymer gemischte Metallsalze von Kationen von Zink (Zn) und Kationen eines zweiten, von Zn verschiedenen Elements (M2) umfasst, das ausgewählt ist aus Gruppe I des Periodensystems der Elemente, bevorzugt Natrium, Lithium oder einer Mischung davon, stärker bevorzugt Natrium; und der Zinkgehalt mindestens 35 Mol-% des Gesamtgehalts an Kationen beträgt.

4. Zusammensetzung nach Anspruch 1, 2 oder 3, wobei das Polyamid Nylon-6 mit einer relativen Viskosität (RV) von 1,8 bis 2,4 ist, gemessen (1% in 96% Schwefelsäure) nach ISO-Testmethode 307.

5. Zusammensetzung nach Anspruch 1, 2 oder 3, wobei das Polyamid Nylon-12 mit einer Schmelzviskosität von weniger als 300 Pa•s ist, gemessen in einem Kapillarrheometer bei 250 °C und einer Scherrate von 12 s⁻¹.

6. Zusammensetzung nach Anspruch 1, 2, 3, 4 oder 5, wobei die Mischung eine Pulverzusammensetzung mit unregelmäßig geformten Partikeln im Bereich von 20 bis 500 Mikrometern umfasst.

7. Zusammensetzung nach Anspruch 1, 2, 3, 4, 5 oder 6 mit einem Schmelzflussindex größer als 15 g/10 min, gemessen bei 200 °C mit einem Gewicht von 2,16 kg, bevorzugt größer als 25 g/10 min oder stärker bevorzugt größer als 40 g/10 min, gemessen bei 240 °C mit einem Gewicht von 2,16 kg.

8. Zusammensetzung nach Anspruch 1, 2, 3, 4, 5, 6 oder 7, wobei die Zusammensetzung mindestens 2 Gew.-% Füllstoff einschließt.

9. Verfahren zum Beschichten einer metallischen Oberfläche, umfassend die folgenden Schritte:
(a) Herstellen einer Mischungszusammensetzung, umfassend ein semikristallines Polyamid und ein Ionomer, wobei die Mischung eine Zusammensetzung nach Anspruch 1, 2, 3, 4, 5, 6, 7 oder 8 aufweist; und
(b) Aufbringen der Zusammensetzung auf die metallische Oberfläche oder eine Schicht auf der Oberfläche, um auf der Oberfläche oder Schicht eine Beschichtung zu erzeugen.

10. Verfahren nach Anspruch 9, ferner umfassend das Erzeugen eines Pulvers mit unregelmäßig geformten Partikeln aus der Mischungszusammensetzung durch Mahlen der Mischung, wobei die Partikel vor dem Aufbringen der Zusammensetzung auf die metallische Oberfläche oder Schicht darauf eine Partikelgröße im Bereich von 100 bis 500 Mikrometer aufweisen.

11. Verfahren nach Anspruch 9 oder 10, wobei das Aufbringen der Zusammensetzung als ein Pulver die Verwendung eines Wirbelbetts aus der Pulverzusammensetzung oder elektrostatisches Spritzen umfasst, oder wobei das Aufbringen der Zusammensetzung Drucklaminieren, Vakuumlaminieren, Extrusionsbeschichten oder Flammspritzen umfasst.

12. Beschichtetes Metallsubstrat, umfassend eine Metallschicht, eine erste Beschichtung der Zusammensetzung nach Anspruch 1, 2, 3, 4, 5, 6, 7 oder 8 und eine optionale äußere Beschichtung über der ersten Beschichtung, umfassend Polyethylen oder Polypropylen oder ein Ionomer eines Copolymers, umfassend copolymerisierte Einheiten von Ethylen und Acrylsäure oder Methacrylsäure .

13. Beschichtetes Metallsubstrat nach Anspruch 12, wobei das Metall Eisen, Stahl, Aluminium oder eine Metalllegierung ist.

14. Beschichtetes Metallsubstrat nach Anspruch 12 oder 13, das die Form einer Röhre hat.

## Revendications

1. Composition comprenant un mélange de :
(1) un polyamide semi-cristallin ayant un point de fusion compris entre 160 °C et 230 °C tel que mesuré par calorimétrie différentielle à balayage (DSC) et une viscosité à l'état fondu inférieure à 500 Pa•sec, mesurée dans un rhéomètre capillaire à 250 °C et à une vitesse de cisaillement de 12 sec⁻¹, présent dans une proportion de 40 à 70 % en poids de la combinaison de (1) et (2), et
(2) un ionomère présent dans une proportion de 30 à 60 % en poids de la combinaison de (1) et (2), le ionomère comprenant au moins un copolymère acide en partie neutralisé, lequel copolymère acide comprend, par rapport au poids total du copolymère (i) 79 à 90 % en poids d'unités copolymérisées d'une alpha-oléfine, (ii) 10 à 21 % en poids d'unités copolymérisées d'un acide carboxylique insaturé en alpha, béta, (iii) 0 à 7 % en poids d'unités copolymérisées d'un troisième comonomère facultatif, de telle sorte que le total des comonomères autres que l'alpha-oléfine est présent dans une proportion de 10 % à 21 % en poids du copolymère, (iv) 20 % en moles à 50 % en moles des groupes d'acide carboxylique totaux étant neutralisés en des sels comprenant des cations de zinc et facultativement des cations d'un second élément (M2) différent du Zn sélectionné dans les Groupes I de la table périodique des éléments, dans lesquels les équivalents molaires du zinc comprennent au moins 20 % en équivalent molaire du contenu total des cations, et (iv) le ionomère ayant un indice de fusion de 10 à 200 g/10 min, déterminé selon la norme ASTM D-1238, mesuré à une température de 190 °C en utilisant un poids de 2,16 kg,
dans laquelle le polyamide est du nylon 6, du nylon 12 ou une combinaison d'entre eux, et
dans laquelle le polyamide a une viscosité relative (RV) de 1,6 à 2,7 (1 % dans de l'acide sulfurique à 96 %), mesurée selon la méthode d'essai ISO 307.

2. Composition selon la revendication 1, dans laquelle l'alpha-oléfine est de l'éthylène et l'acide carboxylique est sélectionné parmi l'acide méthacrylique et l'acide acrylique.

3. Composition selon la revendication 1 ou 2, dans laquelle le copolymère acide neutralisé comprend des sels de métal mélangés de cations de zinc (Zn) et de cations d'un second élément (M2) différent du Zn et choisi parmi le Groupe I de la table périodique des éléments, de préférence de sodium, de lithium ou d'un mélange d'entre eux, de manière plus préférée de sodium, et le contenu en zinc est d'au moins 35 % en moles du contenu total de cations.

4. Composition selon la revendication 1, 2 ou 3, dans laquelle le polyamide est du nylon 6 ayant une viscosité relative (RV) de 1,8 à 2,4 (1 % dans de l'acide sulfurique à 96 %), mesurée selon la méthode d'essai ISO 307.

5. Composition selon la revendication 1, 2 ou 3, dans laquelle le polyamide est du nylon 12 ayant une viscosité à l'état fondu inférieure à 300 Pa•sec, mesurée dans un rhéomètre capillaire à 250 °C et à une vitesse de cisaillement de 12 sec⁻¹.

6. Composition selon la revendication 1, 2, 3, 4 ou 5, dans laquelle le mélange comprend une composition de poudre ayant des particules de forme irrégulière de 20 à 500 microns.

7. Composition selon la revendication 1, 2, 3, 4, 5 ou 6, ayant un indice de fluidité à l'état fondu supérieur à 15 g/10 min, mesuré à 200 °C avec un poids de 2,16 kg, de préférence supérieur à 25 g/10 min, ou de manière encore plus préférée supérieur à 40 g/10 min, mesuré à 240 °C avec un poids de 2,16 kg.

8. Composition selon la revendication 1, 2, 3, 4, 5, 6 ou 7, dans laquelle la composition comprend au moins 2 % en poids d'un agent de charge.

9. Procédé de revêtement d'une surface métallique comprenant les étapes suivantes :
(a) préparation d'une composition d'un mélange comprenant un polyamide semi-cristallin et un ionomère, le mélange ayant une composition selon la revendication 1, 2, 3, 4, 5, 6, 7 ou 8, et
(b) application de la composition sur la surface métallique ou une couche sur ladite surface pour former un revêtement sur ladite surface ou couche.

10. Procédé selon la revendication 9, comprenant en outre la formation d'une poudre comportant des particules de forme irrégulière à partir de la composition du mélange en broyant le mélange, les particules ayant une taille de particule dans la plage de 100 à 500 microns avant l'application de la composition sur la surface métallique ou la couche disposée au-dessus de celle-ci.

11. Procédé selon la revendication 9 ou 10, dans lequel l'application de la composition sous forme de poudre comprend l'utilisation d'un lit fluidisé de la composition de poudre ou une pulvérisation électrostatique, ou dans lequel l'application de la composition comprend une stratification sous pression, une stratification sous vide, un revêtement par extrusion ou une projection à la flamme.

12. Substrat métallique revêtu comprenant une couche de métal, un premier revêtement de la composition selon la revendication 1, 2, 3, 4, 5, 6, 7 ou 8, et un revêtement extérieur facultatif au-dessus du premier revêtement, comprenant du polyéthylène ou du polypropylène ou un ionomère d'un copolymère comprenant des unités copolymérisées d'éthylène et d'acide acrylique ou d'acide méthacrylique.

13. Substrat métallique revêtu selon la revendication 12, dans lequel le métal est du fer, de l'acier, de l'aluminium ou un alliage métallique.

14. Substrat métallique revêtu selon la revendication 12 ou 13 qui est sous la forme d'un tube.
